# EUROPÄISCHE PATENTSCHRIFT

(11) **EP 1 483 091 B1**
(45) Veröffentlichungstag und Bekanntmachung des Hinweises auf die Patenterteilung: **30.08.2006**
(21) Anmeldenummer: 03720144.9
(22) Anmeldetag: 06.03.2003
(51) Int. Cl.: B27N 3/28, B27N 1/02

(54) **VERFAHREN ZUM HERSTELLEN EINES THERMOPLASTISCHEN NATURFASERPRODUKTS**
METHOD FOR THE PRODUCTION OF A THERMOPLASTIC NATURAL FIBRE PRODUCT
PROCEDE DE FABRICATION D'UN PRODUIT THERMOPLASTIQUE EN FIBRES NATURELLES

(30) Priorität: 08.03.2002 DE 10210107; 15.06.2002 DE 10226826; 12.10.2002 DE 10247711
(43) Veröffentlichungstag der Anmeldung: 08.12.2004
(73) Patentinhaber: Hiendl, Helmut, 94315 Straubing (DE)
(72) Erfinder: Hiendl, Helmut, 94315 Straubing (DE)
(74) Vertreter: Graf, Helmut
(86) Internationale Anmeldenummer: PCT/DE2003/000727
(87) Internationale Veröffentlichungsnummer: WO 2003/076147

(56) Entgegenhaltungen:
- EP-A- 0 667 375
- DE-A- 1 653 263
- FR-A- 2 564 374
- US-A- 5 776 281
- US-A- 6 153 293

## Beschreibung

Die Erfindung bezieht sich auf ein Verfahren zum Herstellen eines thermoplastischen Naturfasermaterials oder eines thermoplastischen Naturfaserprodukts gemäß Oberbegriff Patentanspruch 1.

Bekannt ist ein Material bestehend aus zerkleinertem Holz oder Cellulose und einem thermoplastischen Kunststoff (EP-A-0 667 375). Bei diesem bekannten Material liegt der Anteil an Kunststoff zwischen 25 und 80 Gewichtsprozent und der Anteil an zerkleinerter Cellulose bzw. an zerkleinerter Naturfaserkomponente bei etwa 20 bis 75 Gewichtsprozent. Ein grundsätzlicher Nachteil besteht darin, daß insbesondere dann, wenn als Naturfaserkomponente Holz verwendet wird, diese Komponente einen sehr hohen Anteil an Wasser enthält (bis zu 15 Gewichtsprozent). Dieser Wasseranteil muß entfernt und/oder neutralisiert werden, was entweder durch starkes Erhitzen der Gesamtmasse aus Holz und Kunststoff oder durch eine an sich nicht erwünschte Zugabe von Wasser neutralisierenden Zusätzen oder Füllstoffen, wie z. B. CaO, oder aber durch die Verwendung spezieller, Wasser neutralisierender oder absorbierender Kunststoffe erfolgt.

Der Wassergehalt der Naturfaserkomponente ist insbesondere deswegen störend, weil er bei einer späteren Verarbeitung der Holz-Kunststoff-Masse zu Formteilen usw. zur Bildung Dampfblasen führt und damit u.a, zu unerwünschten Vertiefungen oder Unebenheiten in der Außenfläche des hergestellten Formteils.

Bekannt ist weiterhin ein Verfahren zum Herstellen von Platten, Hohlplatten, Profilen oder Hohlprofilen aus lignozellulosem oder ähnlichem Material, wie Holzspäne, Fasern usw. (DE-A-1 653 263). Bei diesem bekannten Verfahren wird das nasse, zerspante Rohmaterial zunächst in mehreren Trocknungsmischern durch Reibungswärme der Mischwerkzeuge, durch Beheizung der verwendeten Mischerbehälter und durch Zuführung von Heißluft getrocknet. Das getrocknete, erhitzte Rohmaterial wird dann in einem Beleimungsmischer unter kontinuierlicher Zugabe eines pulverförmigen Bindemittels beleimt. Das so mit dem Bindemittel vermischte Rohmaterial wird schließlich in einem Extruder zu dem jeweiligen Produkt verarbeitet.

Bekannt ist weiterhin ein Verfahren zum Herstellen eines thermoplastischen Naturfaserproduktes (FR-A-2 564 374), bei dem dem Behandlungs- oder Schneckenraum eines Schneckenextruders die Naturfaserkomponente in Form von Holzspänen und die Kunststoffkomponente zugeführt und zunächst miteinander vermischt und anschließend durch Extrudieren zu einem Ausgangsprodukt geformt werden.

Bekannt ist weiterhin ein synthetisches Holzmehl, welches unter Verwendung einer thermoplastischen Kunststoffkomponente und einer zellulosen Komponente durch Mischen und durch anschließendes Abkühlen und Pulverisieren erzeugt ist (EP-A-0 667 375 A1).

Aufgabe der Erfindung ist es, ein verbessertes Verfahren aufzuzeigen. Zur Lösung dieser Aufgabe ist ein Verfahren entsprechend dem Patentanspruch 1 ausgebildet.

Bei dem erfindungsgemäßen Verfahren wird die wenigstens eine Kunststoffkomponente aus dem thermoplastischen Kunststoff dem Behandlungsraum als Strang zugeführt. Im Behandlungsraum wird dann dieser Strang durch die im Behandlungsraum angeordnete Misch- und Trenneinrichtung ebenfalls zertrennt. Hierbei erfolgt gegebenenfalls bei unterstützender Beheizung des Behandlungsraumes durch die Zerkleinerungsarbeit, die Dehn- und Scherarbeit, die Reibungsarbeit usw. eine schonende und regelbare partielle Erhitzung der im Verfahren befindlichen Bestandteile, so dass einerseits der Wasseranteil durch Verdampfen aus der Naturfaserkomponente ohne deren Beschädigung zuverlässig entfernt und andererseits die thermoplastische Kunststoffkomponente soweit erhitzt wird, daß sich diese Komponente zumindest teilweise als Beschichtung auf der fein zerkleinerten Naturfaserkomponente abscheidet, also ein "mischprodukt" erhalten wird, welches fein zerkleinerte Partikel oder Fasern der Naturfaserkomponente mit der Kunststoffkomponente beschichtet enthält. Das Zertrennen erfolgt durch Reißen, Brechen, Scheren, Schneiden usw.. Durch das Einbringen der Kunststoffkomponente als Strang ergibt sich auch die Möglichkeit einer sehr genauen und einfachen Dosierung.

Bei einer bevorzugten Ausführungsform wird als Naturfaserkomponente Holz, vorzugsweise als Holz-Pellets verwendet, mit denen sich dann auch für die Naturfaserkomponente eine einfache und genaue Dosiermöglichkeit ergibt. Derartige Holz-Pellets sind dem Fachmann bekannt und werden mit speziellen Pelletierpressen (z.B. Ringmatrizenpressen) aus zerkleinertem Holz, beispielsweise Holzmehl, Holzspäne oder anderen Holzresten hergestellt, und zwar dadurch, daß diese Holzbestandteile beim Pelletieren unter Druck und ohne Zusatzmittel, allein aufgrund der in natürlicher Weise im Holz vorhandenen Stoffe (Harz, Lignin usw.) zu Pellets geformt werden.

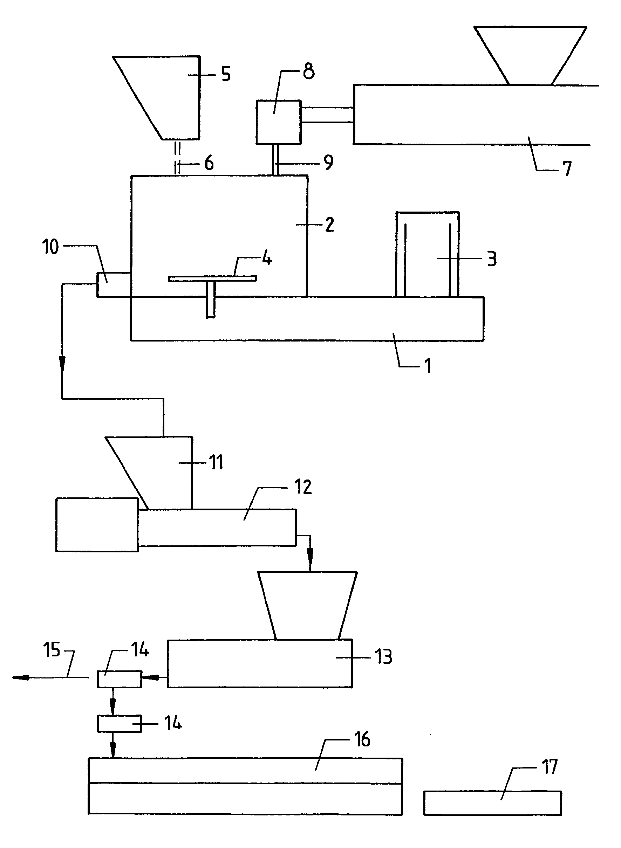

Weiterbildungen der Erfindung sind Gegenstand der Unteransprüche. Die Erfindung wird im Folgenden anhand der Figur, die in vereinfachter schematischer Darstellung die verschiedenen Schritte eines Verfahrens gemäß der Erfindung wiedergibt, näher erläutert.

Zentrales Element der in der Figur dargestellten Anlage zum Durchführen des erfindungsgemäßen Verfahrens ist ein als Misch- und Zerkleinerungs- oder Trenneinrichtung dienender Agglomerator 1 bekannter Ausbildung, der im wesentlichen aus einem an der Oberseite offenen Behandlungsraum oder Behälter 2 mit einem im Innenraum des Behälters angeordneten und um die vertikale Behälterachse durch einen Antrieb 3 angetriebenen Trenn- und Rührelement 4 besteht. Die Drehgeschwindigkeit des schlagmesserartigen Trenn- und Rührelementes ist durch entsprechende Steuerung des Antriebes 3 und/oder eines nicht dargestellten Getriebes regelbar.

Dem Behälter 2 wird über einen Zuführtrichter 5 die Naturfaserkomponente 6 zugeführt, die bei der dargestellten Ausführungsform im wesentlichen Holzspäne in pelletierter Form ist. Die Verwendung der Naturfaserkomponente in Pellet-Form gestattet unter anderem ein vereinfachtes Handling und auch eine genauere und vereinfachte Dosierung bei der Zugabe der Naturfaserkomponente 6 in den Behälter 2.

In den Behälter 2 wird weiterhin die von wenigstens einem thermoplastischen Kunststoff gebildete Kunststoffkomponente eingebracht, und zwar über einen Dosierextruder 7, der mit seinem Ausgang 8 über der Öffnung des Behälters 2 angeordnet ist, so daß wenigstens ein vom Dosierextruder 7 erzeugte Stränge 9 der Kunststoffkomponente in den Behälter 2 kontinuierlich mit der kontinuierlichen Zugabe der Naturfaserkomponente eingebracht wird, und zwar in dem die Rezeptur entsprechenden Anteil Naturfaserkomponente/Kunststoffkomponente und bei umlaufendem Misch- und Trennelement 4.

Der Anteil an Kunststoff kann in weiten Grenzen varieren, z.B. 60 bis 20 Gewichtsprozent bezogen auf die Ausgangsrezeptur und beträgt beispielsweise 40 bis 20 Gewichtsprozent bezogen auf das Gesamtgewicht des hergestellten thermoplastischen Naturfaserprodukts. Ein Anteil an Kunststoff bei etwa 15 Gewichtsprozent oder niedriger kan u.a. aus Kostengründen zweckmäßig sein.

In dem Agglomerator 1 erfolgt ein Zertrennen und Zerkleinern des Kunststoffstrangs 9 durch Schneiden, Reißen usw.. Gleichzeitig erfolgt in dem Behälter 2 auch ein Zerkleinern der als Pellets zugeführten Naturkomponente 6 und ein "Mischen" beider Komponenten.

Die Behandlung der beiden Komponenten in dem Behälter 2 erfolgt in der Weise, daß am Ende des durchgeführten Misch- und Zerkleinerungsprozesses ein Zwischenprodukt vorliegt, welches die Naturfaser bzw. Holzkomponente in fein zerkleinerter Form oder als Fasern mit einem Überzug aus der Kunststoffkomponente aufweist.

Beim Mischen und Zerkleinern wird eine erhebliche Energie in die Komponenten partiell eingebracht, und zwar u.a. durch die Zerkleinerungsarbeit beim Zerkleinern der Komponenten, durch Dehnungsarbeit, insbesondere beim Zerkleinern des Stranges 9, durch Reibungs- und Scherarbeit beim Zerkleinern des Stranges 9 sowie beim Durchmischen der beiden Komponenten im Behälter 2 usw.. Eingebracht wird weiterhin auch die im Kunststoffstrang 9 vorhandene Wärmeenergie, wobei dann auch noch die Enthalpie des flüssigen Kunststoffes genutzt werden kann. Durch die beim Mischen und Zerkleinern in die Mischkomponenten eingebrachte Energie wird, ggf. mit unterstützender Beheizung des Behälters 2, u.a. das notwendige Trocknen der Naturfaserkomponente erreicht. Durch das ständige Umwälzen der Komponenten während der Behandlung im Behälter 2 wird das Austreten der Feuchtigkeit in Form von Wasserdampf aus dem Mischprodukt wesentlich beschleunigt.

Das Misch- oder Zwischenprodukt, welches tatsächlich aus der zerkleinerten und getrockneten Naturfaserkomponente besteht, auf deren Partikel oder Fasern die Kunststoffkomponente zumindest zum Teil aufgebracht oder abgeschieden ist, wird über einen Auslaß 10 dem Aufgabetrichter 11 einer Dosiereinrichtung 12 eines Pelletierers 13 zugeführt. Die Dosiereinrichtung 12 ist bei der dargestellten Ausführungsform eine Schnecken-Dosiereinrichtung. Das Ausgangsprodukt des Pelletierers sind somit Pellets 14 aus der getrockneten und zerkleinerten Naturfaser- oder Holzkomponente und dem Kunststoff der Kunststoffkomponente, der diese Pellets 14 zusammenhält.

Die Pellets 14 können als Ausgangs- oder Rohmaterial für eine weitere Fertigung gelagert und gehandelt werden, wie dies mit dem Pfeil 15 in der Figur angedeutet ist, oder aber die Pellets 14 werden einer Einrichtung 16 zum Herstellen von Formteilen 17, beispielsweise einem Extruder zugeführt.

Die Formteile 17 können unterschiedlichster Art sein und haben grundsätzlich den Vorteil, daß für ihre Herstellung nur ein geringer Anteil an Kunststoff (beispielsweise nur etwa 15 Gewichtsprozent) benötigt wird, während der Rest von der preiswert auf dem Markt erhältlichen Naturfaser- oder Holzkomponente gebildet ist. Weiterhin lassen sich die Formteile 17 mit einem ansprechenden äußeren Erscheinungsbild und mit hoher Festigkeit herstellen.

Bei dem vorbeschriebenen Verfahren sind verschiedenste Varianten denkbar. So ist es beispielsweise möglich, das Mischen und Zerkleinern, d. h. die Materialaufbereitung in einem geschlossenen und mit Unterdruck beaufschlagten Behälter 2 vorzunehmen, um so das Trocknen der Naturfaser- oder Holzkomponente zu beschleunigen und zu verbessern. Weiterhin ist es möglich, bei der Materialaufbereitung weitere Zusatzstoffe einzubringen, beispielsweise Tannin oder tanninhaltige Naturstoffe oder Holzmaterialien, beispielsweise Rinde aus Akazie, und/oder Kolophonium und/oder Haftvermittler, d. h. Stoffe, die das Anhaften des Kunststoffes an der zerkleinerten Naturfaser- oder Holzkomponente und/oder an anderen in die aufbereitete Mischung eingebrachten Komponenten und/oder an später bei der Verarbeitung zu den Formteilen 17 verwendeten Komponenten verbessert. Es besteht auch die Möglichkeit, wasserbindende Zusätze einzubringen, beispielsweise Anhydride, z.B. Maleinsäureanhydride, um so den Trockenvorgang weiter zu beschleunigen und zu verbessern.

Insbesondere dann, wenn das thermoplastische Naturfaserprodukt zur Fertigung von Produkten oder Formteilen mit hoher Festigkeit verwendet wird, ist es möglich, bei der Materialaufbereitung ein zusätzliches Fasermaterial einzubringen, und zwar beispielsweise dadurch, daß bei der Materialaufbereitung zusätzlich zu dem die Matrix des thermoplastischen Naturfaserproduktes bildenden Kunststoff ein weiteres faserförmiges Kunststoffmaterial, beispielsweise als wenigstens ein weiterer Kunststoffstrang eingebracht wird. Dieses weitere Kunststoffmaterial ist dann z.B. so gewählt, daß es bei der Materialaufbereitung im wesentlichen faserförmig bleibt, d. h. beispielsweise einen im Vergleich zu dem die Matrix bildenden Kunststoffmaterial einen höheren Schmelzpunkt aufweist.

Weiterhin besteht die Möglichkeit, die die Matrix bildende Kunststoffkomponente in mehreren Strängen 9 der Materialaufbereitung im Behälter 2 zuzuführen, wobei die Form des Stranges oder der Stränge grundsätzlich beliebig ist, d. h. z. B. als faserförmiger Strang, als extrudierter folienförmiger Strang, als netzartiger Strang oder netzartige Struktur usw.

Anstelle des vorstehend beschriebenen Agglomerators 1 mit nur einem Misch- und Zerkleinerungselement 4 können selbstverständlich auch andere Misch- und Zerkleinerungsvorrichtungen verwendet werden, insbesondere auch solche, die mehrere individuell steuerbare Misch- und/oder Zerkleinerungselemente und/oder Sichtelemente aufweisen.

Durch Steuerung, insbesondere der Dauer und/oder Intensität der Materialaufbereitung kann die Konsistenz des Mischproduktes verändert und an die Bedürfnisse der nachfolgenden Einrichtungen, beispielsweise der Dosiereinrichtung 12 und des Pelletierers 13 angepaßt werden. So kann beispielsweise durch Steuerung der Aufbereitungszeit und/oder der Aufbereitungsintensität wahlweise ein feinkörniges oder grobkörniges Zwischen- oder Mischprodukt erhalten werden, wobei dann in dem grobkörnigeren Zwischenprodukt die auch dort fein zerkleinerte Naturfaser- oder Holzkomponente durch die Kunststoffkomponente zu größeren Partikeln zusammengebacken ist. Die Steuerung der Dauer und/oder Intensität der Materialaufbereitung ist praktisch verzögerungsfrei auf die im Verfahren befindlichen Komponenten wirksam.

Die Geschwindigkeit des Agglomerators 1 bzw. des dortigen Misch- und Trennelementes 4 ist aber in jedem Fall ausreichend hoch gewählt, so daß tatsächlich ein Zertrennen des Stranges 9 und nicht ein Aufwickeln dieses Stranges durch das umlaufende Misch- und Trennelement 4 erfolgt.

Für die Kunststoffkomponente eignen sich bei dem erfindungsgemäßen Verfahren grundsätzlich alle thermoplastischen Kunststoffe, insbesondere aber auch solche, die ein ausreichend hohes E-Modul (Zug-E-Modul und/oder Biege-E-Modul) aufweisen. Geeignete Thermoplaste sind beispielsweise ABS, PS, thermoplastische Elastomere, PP, PE in verschiedenen Modifikationen, eventuell auch PA und PC. Für die Naturfaserkomponente eignen sich insbesondere die vorstehend bereits erwähnten Holz-Pellets, aber auch Sägemehl, Holzschnitzel, Holzfasern und/oder andere Naturfasern, wie z.B. Stroh, Fasern aus Maispflanzen, fasrige Abfälle aus der Naturfaserproduktion, wie z.B. Hanf-Schäben. Auch Zusätze aus Kunstfasern und/oder modifizierte Naturfasern (z.B. Zellulosefasern) sind denkbar.

Vorstehend wurde davon ausgegangen, daß das Mischsystem von einem einzigen Mischer oder Agglomerator 1 gebildet ist. Es sind auch Ausführungen denkbar, in denen das Mischersystem beispielsweise zur Leistungssteigerung kaskadiert ist, d.h. aus mehreren in der Verabeitungs- oder Produktionsfolge in Verbindung stehenden und aufeinander folgenden Mischern besteht, z.B. aus einem Vormischer mit Zerkleinerungssystem und/oder aus einer vorgeschalteten Zerkleinerungseinrichtung, der bzw. die dann beispielsweise mit einem System oder einer Einrichtung (z.B. Sichter) zur Einstellung der Teilchengröße ausgestattet ist. Diesem Vormischer und/oder dieser Zerkleinerungseinrichtung wird dann beispielsweise die Naturfaserkomponente aufgegeben, während die Kunststoffkomponente in einem anschließenden Mischer mit der Naturfaserkomponente vermischt wird.

Weiterhin ist es denkbar, daß in der Produktionsfolge aufeinander folgend und miteinander in Verbindung stehend mehrere Mischer vorgesehen sind, über die die Kunststoffkomponente nach und nach, d.h. in mehreren Schritten zugegeben wird. Das Mischersystem kann schließlich auch einen Kühlmischer mit Zerkleinerungskomponenten oder -elementen aufweisen, um so die Korngröße des Agglomerats zu steuern, welches dann bei der in der Figur dargestellten Ausführungsform dem Aufgabetrichter 11 der Dosiereinrichtung 12 zugeführt wird.

Die Bildung des den Agglomerator 1 oder einem anderen Mischsystem zugeführten Stranges 9 kann auch durch Koextrusion unter Verwendung wenigstens zweier unterschiedlicher Kunststoffe erfolgen, die beispielsweise in ihren interessierenden Eigenschaften unterschiedlich sind und/oder von denen eine Komponente besonders preiswert auf dem Markt erhältlich ist, während eine weitere Komponente z.B. spezielle, für die Herstellung des Produktes notwendige oder optimale Eigenschaften besitzt, beispielsweise mit der jeweils verwendeten Naturfaserkomponente besonders verträglich ist.

In diesem Sinne ist es beispielsweise möglich, den Strang 9 mit einer Kernkomponente aus PP-Homopolymer (steif und höher schmelzend) und mit einer Oberflächenschicht aus PP-Copolymer (weicher, schlagzäher und niedrig schmelzend) herzustellen, wobei die Oberflächenschicht dann eventuell noch mit einem Haftzusatz z.B. mit einem Maleinsäure-Polymerisat modifiziert ist.

Weiterhin ist es z.B. möglich, den Strang 9 mit einer Kernkomponente aus HD-PE (fest, steif und preiswert erhältlich) und mit einer Oberflächenschicht aus EVAC (Ehtylen-Vinyl-Acetat) herzustellen, dessen Eigenschaften elastisch, klebrig und Füllstoffe gut aufnehmend sind.

Weiterhin ist es möglich, den Strang 9 so zu extrudieren, daß dessen Kern aus einem kostengünstigen Massenkunststoff (PP, HD-PE) oder aus einem anderen Kunststoff, beispielsweise Polyamid, thermoplastisches Elastomer usw. besteht, wobei der Kern von Deckschichten aus solchen Kunststoffen, Kunststoffcompounds oder Copolymerisaten umgeben ist, die mit Pflanzenfasern besonders gut verträglich sind. Bei einer derartigen mehrschichtigen Ausführung besteht der Kern des Stranges 9 beispielsweise aus HD-PE oder aus HD-PE/EVAC-Compound bzw. -Copolymerisat, eine anschließende Zwischenschicht aus EVAC (Ehtylen-Vinyl-Acetat) und eine äußere Deckschicht aus einem Kunststoff aus Cellulose, beispielsweise aus Celluloseacetat oder Cellulosepropionat, z.B. zum Teil modifiziert (compoundiert oder copolymerisiert) mit EVAC.

Um die Haftung zwischen dem in der Regel hydrophoben Kunststoff und den hydrophilen Naturfaserbestandteilen zu verbessern, ist es weiterhin möglich, im Agglomerator 1 oder in einem Mischer eines anderen Mischsystems eine elektrische Vorbehandlung des Kunststoffs, beispielsweise eine Corona-Behandlung oder eine Behandlung durch Plasma-Entladung vorzunehmen, um durch diese Behandlung die Polarität insbesondere auch unpolarer Kunststoffe zu erhöhen und die Haftung zu verbessern.

Es besteht weiterhin die Möglichkeit, in der Produktionsfolge Schaumadditive (Foaning Agents) beizumischen, um so u.a. die Schlagzähigkeit, Witterungsbeständigkeit und/oder Nagelbarkeit des hergestellten Endproduktes 17 zu verbessern. Als Schaumadditive eignen sich z.B. Natriumhydrogencarbonat, Zitronensäure und - derviate. Hierbei muß die Prozeßführung natürlich so gewählt werden, daß ein Aufschäumen erst in dem Formwerkzeug, beispielsweise in dem Extruder 16 erfolgt, das bzw. der zur Herstellung des Produktes verwendet wird.

Durch Zugabe von zusätzlichen Fasern, beispielsweise Cellulosefasern kann die Schlagzähigkeit des Produktes noch weiter verbessert werden.

### Bezugszeichenliste

- 1: Agglomerator
- 2: Behälter
- 3: Antrieb
- 4: Misch- und/oder Trennelement
- 5: Aufgabetrichter für die Naturfaserkomponente
- 6: Holz-Pellet
- 7: Dosierextruder
- 8: Extruderkopf
- 9: Strang
- 10: Auslaß
- 11: Aufgabetrichter
- 12: Dosiereinrichtung
- 13: Pelletierer
- 14: thermoplastisches Naturfaserprodukt in Form von Pellets
- 15: Lagerung oder Weiterverkauf
- 16: Formwerkzeug, beispielsweise Extruder
- 17: Produkt aus dem thermoplastischen Naturfasermaterial

## Patentansprüche

1. Verfahren zum Herstellen eines thermoplastischen Naturfasermaterials oder eines thermoplastischen Naturfaserproduktes (14, 17), durch Behandeln wenigstens einer Naturfaserkomponente (6) sowie wenigstens einer thermoplastischen Kunststoffkomponente (9) in einer Misch- und Zerkleinerungseinrichtung (1) mit wenigstens einem in dem Behandlungsraum dieser Einrichtung vorgesehenen Misch- und Zerkleinerungselement zur Erzielung eines Misch- oder Zwischenproduktes durch Zerkleinern und Mischen der Komponenten, sodass das Misch- oder Zwischenproduktes zumindest die Naturfaserkomponente in zerkleinerter Form und zumindest teilweise auf diese abgeschieden die Kunststoffkomponente aufweist, die dem Behandlungsraum als wenigstens einen Strang zugeführt wird,
**dadurch gekennzeichnet,**
**dass** der Behandlungsraum (2) ein Behälter ist und die Misch- und Zerkleinerungseinrichtung (1) ein im Behälter umlanfendes Trenn- und Rührelement umfaßt.

2. Verfahren nach Anspruch 1, **dadurch gekennzeichnet, dass** die Misch- und Zerkleinerungseinrichtung (1) als eine einem Pelletierer zum Pelletieren des Misch- oder Zwischenproduktes oder einem Extruder oder einem Kühlmischer mit Zerkleinerungskomponenten zur Steuerung der Korngröße des Misch- oder Zwischenproduktes vorausgehende eigenständige Einrichtung verwendet ist.

3. Verfahren nach Anspruch 1 oder 2, **dadurch gekennzeichnet, dass** die Kunststoffkomponente zumindest zum Teil ein koextrudierter Strang (9) bestehend aus wenigstens zwei unterschiedlichen Kunststoffen ist, wobei beispielsweise ein Kunststoff ein Kern des Stranges (9) und ein weiterer Kunststoff zumindest eine den Kern umschließende Schicht bildet.

4. Verfahren nach einem der vorhergehenden Ansprüche, **dadurch gekennzeichnet, daß** die Naturfaserkomponente (6) zumindest teilweise Holz ist, beispielsweise Sägemehl, Holzspäne und/oder Holz-Pellets,

5. Verfahren nach einem der vorhergehenden Ansprüche, **dadurch gekennzeichnet, daß** der Behandlungsraum (2) beheizt und/oder beim Mischen und Zerkleinern mit einem Unterdruck beaufschlagt wird.

6. Verfahren nach einem der vorhergehenden Ansprüche, **gekennzeichnet durch** wenigstens einen Extruder (7) zur Erzeugung des wenigstens einen Strangs (9) der Kunststoffkomponente.

7. Verfahren nach einem der vorhergehenden Ansprüche, **dadurch gekennzeichnet, daß** dem Behandlungsraum (2) wenigstens eine weitere Komponente, beispielsweise eine weitere Kunststoffkomponente, beispielsweise in Faser- oder Strangform, und/oder wenigstens ein Füller und/oder ein Haftvermittler und/oder natürliche Harze oder Holzbestandteile, wie z. B. Tannin und/oder Kolophonium zugeführt werden.

8. Verfahren nach einem der vorhergehenden Ansprüche, **dadurch gekennzeichnet, daß** das Misch- oder Zwischenprodukt und/oder aus diesem hergestellten Pellets (14) als Ausgangsmaterial zum Formen von Formteilen (17) vorzugsweise durch Extrudieren verwendet werden.

9. Verfahren nach einem der vorhergehenden Ansprüche, **dadurch gekennzeichnet, daß** als Misch- und Zerkleinerungseinrichtung eine Mischer-Anordnung verwendet wird, die in der Produktionsfolge aneinander anschließend und miteinander verbunden wenigstens zwei Mischer aufweist,
wobei beispielsweise
jedem Mischer die Kunststoffkomponente zugeführt wird.

10. Verfahren nach einem der vorhergehenden Ansprüche, **dadurch gekennzeichnet, daß** zumindest ein Teil der Naturfaserkomponente (6) vor dem Mischen mit der Kunststoffkomponente (9) in einem Vormischer mit Zerkleinerungseinrichtung und vorzugsweise mit Sichter behandelt wird,
und/oder
daß das Misch- oder Zwischenprodukt in einem Kühlmischer mit Zerkleinerungskomponenten zur Steuerung der Korngröße des Misch- oder Zwischenprodukts behandelt wird,
und/oder
daß die Naturfaserkomponente oder ein Teil dieser Komponente und/oder das Misch- oder Zwischenprodukt in einem Zerkleinerungs- und Sichtersystem zur Steuerung der Korngröße behandelt wird.

11. Verfahren nach einem der vorhergehenden Ansprüche, **gekennzeichnet durch** die Zugabe eines Schäumungsmittels, beispielsweise Natriumhydrogencarbonat und und Säure, beispielsweise Zitronensäure,
und/oder
daß in der wenigstens einen Misch- und Zerkleinerungseinrichtung eine elektrische Vorbehandlung, der Kunststoffkomponente erfolgt.

## Claims

1. Method for producing a thermoplastic natural fibre material or a thermoplastic natural fibre product (14, 17) by treating at least one natural fibre component (6) and at least one thermoplastic component (9) in a mixing and comminuting device (1) with at least one mixing and comminuting element provided in the treatment area of said device for obtaining an intermediate or mixed product by comminuting and mixing the components, so that the intermediate or mixed product at least has the natural fibre component in comminuted form and the plastic component at least partly deposited thereon and which is supplied to the treatment area as at least one strand, **characterized in that** the treatment area (2) is a container and the mixing and comminuting device (1) comprises a separating and stirring element rotating within the container.

2. Method according to claim 1, **characterized in that** the mixing and comminuting device (1) is used as an independent device preceding a pelletizer for pelletizing the intermediate or mixed product or an extruder or a cooling mixer with comminuting components for controlling the particle size of the intermediate or mixed product.

3. Method according to claim 1 or 2, **characterized in that** the plastic component is at least in part a coextruded strand (9) comprising at least two different plastics, one plastic e.g. being a core of the strand (9) and a further plastic at least forming a layer embracing the core.

4. Method according to one of the preceding claims, **characterized in that** the natural fibre component (6) is at least in part wood, e.g. sawdust, wood shavings and/or wood pellets.

5. Method according to one of the preceding claims, **characterized in that** the treatment area (2) is heated and/or is subject to vacuum action during mixing and comminuting.

6. Method according to one of the preceding claims, **characterized by** at least one extruder (7) for producing the at least one plastic component strand (9).

7. Method according to one of the preceding claims, **characterized in that** to the treatment area (2) is supplied at least one further component, e.g. a further plastic component, e.g. in fibre or strand form, and/or at least one filler and/or an adhesion promoter and/or natural resins or wood constituents, such as e.g. tannin and/or colophony.

8. Method according to one of the preceding claims, **characterized in that** intermediate or mixed product and/or the pellets (14) produced therefrom are used as the starting material for shaping shaped part (17), preferably by extrusion.

9. Method according to one of the preceding claims, **characterized in that** the mixing and comminuting device is constituted by a mixer arrangement, which has in the production sequence in following manner and interconnected at least two mixers, and e.g. the plastic component is supplied to each mixer.

10. Method according to one of the preceding claims, **characterized in that** at least part of the natural fibre component (6) is treated prior to mixing with the plastic component (9) in a premixer with a comminuting device and preferably a classifier and/or the intermediate or mixed product is treated in a cooling mixer with comminuting components for controlling the particle size of the intermediate or mixed product and/or the natural fibre component or part of said component and/or the intermediate or mixed product is treated in a comminuting and classifier system for controlling the particle size.

11. Method according to one of the preceding claims, **characterized by** the addition of a foaming agent, e.g. sodium hydrogen carbonate and acid, e.g. citric acid and/or there is an electric pretreatment of the plastic component in the at least one mixing and comminuting device.

## Revendications

1. Procédé pour la fabrication d'un matériau thermoplastique en fibre naturelle ou d'un produit thermoplastique en fibre naturelle (14, 17) par traitement d'au moins un composant de fibre naturelle (6) ainsi que d'au moins un composant thermoplastique synthétique (9) dans un dispositif de mélange et de réduction (1), au moins un élément de mélange et de réduction étant prévu dans la chambre de traitement de ce dispositif, en vue de l'obtention d'un produit de mélange ou d'un produit intermédiaire par réduction ou mélange des composants, de sorte que le produit de mélange ou le produit intermédiaire présente au moins le composant de fibre naturelle sous une forme réduite et, au moins partiellement séparé de celui-ci, le composant synthétique, qui approvisionne la chambre de traitement par au moins un écheveau,
**caractérisé en ce que** la chambre de traitement (2) est un réceptacle, et le dispositif de mélange et de réduction (1) comporte dans le réceptacle un organe rotatif et agitateur.

2. Procédé selon la revendication 1, **caractérisé en ce que** le dispositif de mélange et de réduction (1) est utilisé comme un dispositif distinct précédant une pastilleuse pour le pastillage du produit de mélange ou du produit intermédiaire, ou une extrudeuse, ou un malaxeur à froid avec des composants de réduction permettant la, régulation du calibre du produit de mélange ou du produit intermédiaire.

3. Procédé d'après la revendication 1 ou 2, **caractérisé en ce que** le composant synthétique est au moins partiellement un écheveau coextrudé (9) constitué d'au moins deux matières synthétiques différentes, dans lequel par exemple une matière synthétique forme le noyau de l'écheveau (9), et une autre matière synthétique forme au moins un des noyaux de la couche enveloppante.

4. Procédé selon l'une quelconque des revendications précédentes, **caractérisé en ce que** le composant de fibre naturelle (6) est au moins partiellement du bois, par exemple de la sciure, des copeaux de bois et/ou des pastilles de bois.

5. Procédé selon l'une quelconque des revendications précédentes, **caractérisé en ce que** la chambre de traitement (2) est chauffée et/ou mise sous vide lors du mélange et de la réduction.

6. Procédé selon l'une quelconque des revendications précédentes, **caractérisé par** au moins une extrudeuse (7) pour la production d'au moins un écheveau (9) du composant synthétique.

7. Procédé selon l'une quelconque des revendications précédentes, **caractérisé en ce que** la chambre de traitement (2) est alimentée en au moins un autre composant, par exemple un autre composant synthétique, par exemple sous forme fibreuse ou sous forme d'écheveau, et/ou par au moins une charge et/ou un agent adhésif et/ou un ingrédient ligneux ou résineux, comme par exemple du tanin et/ou de la colophane.

8. Procédé selon l'une quelconque des revendications précédentes, **caractérisé en ce que** le produit de mélange ou le produit intermédiaire et/ou les pastilles (14) produites à partir de celui-ci seront utilisés comme matière première pour le formage de pièces moulées (17), de préférence par extrusion.

9. Procédé selon l'une quelconque des revendications précédentes, **caractérisé en ce qu'**une configuration de mélangeur, qui présente au moins deux mélangeurs raccordés l'un à l'autre et solidaires dans le cycle de production, est utilisée comme dispositif de mélange et de réduction,
dans lequel, par exemple,
chaque mélangeur est alimenté en un composant synthétique.

10. Procédé selon l'une quelconque des revendications précédentes, **caractérisé en ce qu'**au moins une partie du composant de fibre naturelle (6) est traitée avant le mélange avec le composant synthétique (9) dans un prémélangeur avec dispositif de réduction, et préférentiellement avec un séparateur à air,
et/ou
**en ce que** le produit de mélange ou le produit intermédiaire est traité dans un malaxeur à froid avec des composants de réduction, pour une régulation du Calibre du produit de mélange ou du produit intermédiaire,
et/ou **en ce que** le composant de fibre naturelle ou une partie de ce composant et/ou le produit de mélange ou le produit intermédiaire est traité dans un système de réduction et un système de séparation à air, pour une régulation du calibre.

11. Procédé selon l'une quelconque des revendications précédentes, **caractérisé par** l'ajout d'un agent moussant, par exemple de l'hydrogénocarbonate de sodium, et d'acide, par exemple de l'acide citrique,
et/ou
en ce qu'un traitement préalable électrique du composant synthétique a lieu dans au moins un dispositif de mélange et de réduction.
